# EUROPEAN PATENT SPECIFICATION

(11) **EP 3 409 573 B1**
(45) Date of publication and mention of the grant of the patent: **01.07.2020**
(21) Application number: 17174378.4
(22) Date of filing: 02.06.2017
(51) Int. Cl.: B63B 49/00, G08B 21/08

(54) **A TRANSPORT**
TRANSPORT
TRANSPORT

(43) Date of publication of application: 05.12.2018
(73) Proprietor: Anemoi Marine Technologies Limited, London E1W 3SS (GB)
(72) Inventor: STRINGFELLOW, Duncan, London, E1W 3SS (GB)
(74) Representative: Potter Clarkson

(56) References cited:
- WO-A1-2015/071537
- JP-A- H03 159 897
- US-A- 5 226 773
- US-A- 5 511 922
- US-A1- 2005 012 315

## Description

### Field of the Invention

The present disclosure relates to a transport for conveying a Flettner rotor over the deck of a ship and, more particularly, to transports comprising a trolley for rolling engagement with a railway for conveying a Flettner rotor over the deck of a ship.

### Background to the Invention

Flettner rotors, also known as Magnus rotors, can be used on waterborne vessels for propulsion. Such rotors make use of the Magnus effect for vessel propulsion.

The term Flettner rotor, as used in this application, refers to the entire machine, not just the rotor body.

Flettner rotors are generally placed upright, in use, on the deck of waterborne vessels. Typically, Flettner rotors comprise an outer rotor body in the form of a cylindrical tube disposed about a stator, the rotor body being coupled to the stator via a rotatable coupling, normally comprising an upper bearing towards the top end of the stator and a lower bearing lower down the stator, often at about a mid-point thereof. The stator is typically connected to a base, which is in turn connected to the vessel deck. The rotor body may be longer than and project above the stator, such that the upper bearing may be at about the mid-point of the rotor body height.

In the case of a Flettner rotor fitted to a waterborne vessel, the rotor body is caused to rotate about its vertical axis and, as the surrounding airflow moves over the spinning rotor body, the relative motion between the spinning body of the rotor body and the air gives rise to pressure differences in the air. The side of the rotor body which is rotating into the airflow retards the airflow locally as a result of the drag caused by the surface of the rotor body, whereas the side of the rotor body which is rotating away from the airflow speeds up the airflow locally. A high pressure region then develops on the side of the rotor body which is rotating into the airflow and a low pressure region develops on the side of the rotor body which is rotating away from the airflow. As such, a force in the direction of the low pressure region of the rotor body is generated and the force is transferred to the vessel, and this force may assist in the propulsion of the vessel. Multiple Flettner rotors can be used in conjunction on a single vessel.

A modern day application of the Flettner rotor is on large vessels such as cargo ships. Flettner rotors are used during transit in conjunction with a vessel's primary propulsion system so as to reduce the burden on the primary propulsion system. This can lead to significant fuel savings, in particular, for long distance journeys under suitable wind conditions. Flettner rotors can present a more efficient means of ship propulsion as compared to the main drive system and therefore the environmental impact of vessels fitted with Flettner rotors can be significantly reduced as compared to vessels which are not so equipped.

Issues can arise when a vessel which has been fitted with one or more Flettner rotors while the vessel is at port due to the size of the rotor bodies and their location on the deck of the vessel. The Flettner rotors can obstruct access of cranes and loading, discharging and other machinery to the deck of the vessel. This can cause delays in loading and unloading of the vessel and can also be hazardous.

As such, there is a need to provide a means by which Flettner rotors may be used on the deck of a vessel to provide the aforementioned fuel saving benefits without the drawback that access to the vessel is obstructed.

JP H03 159897 A discloses a heavy cargo loading device for a vessel. When cargo is loaded, a ramp position is adjusted by an elevating/sinking lift so that the height difference between the wharf and ramp due to changes in the tide, etc., lies within an allowable range of slope for a transport vehicle. A plurality of retaining pawls protrude from an opening edge of the lift, such that a heavy cargo loading pallet may be transferred to the retaining pawls by a transport vehicle, and suspended thereon. The lift may be sunk to transfer the pallet onto a mobile dolly. Unloading to land follows a reverse procedure.

US 5511922 A relates to a loading and unloading system in a ship wherein a transport car carrying weight cargo enters the ship from an opening in the gunwale via a ramp. The system comprises a lift table which permits the car to board, mechanisms for raising and lowering the lift table disposed at least at the four corners of the table, a ramp of which the near end is selectively supported on the lift table, sensors for detecting the tilt angle of the ramp and the horizontality of the lift table, and a controller for controlling the raising and lowering mechanisms so as to respectively maintain the tilt angle of the ramp and the horizontality of the lift table within set predetermined limits. The tilt of the ramp is thereby maintained within fixed limits irrespective of relative displacements of the ship's hull and the wharf so that the transport car always runs smoothly between the lift table and the wharf.

US 5226773 A discloses an apparatus for stowing a pallet mounted with a cargo into a hold of a freight vessel, which comprises: two pairs of rails installed on a floor of a hold of a freight vessel in parallel with the center line of the freight vessel; at least two rows of pallet stands, for placing a pallet mounted with a cargo, provided at least outside each of the two pairs of rails; two carriages travellable on the two pairs of rails in synchronization with each other, a vertically moveble table provided each carriage; and a lifting mechanism of the table. The abovementioned lifting mechanism comprises an outer cylinder fixed vertically on each carriage, an inner cylinder slidably engaging in the outer cylinder, a disk fixed to the upper end of the inner cylinder and connected to the table, and a hydraulic means comprising a cylinder pin-connected vertically to each carriage and a rod engaging in the cylinder, the upper end of the rod of the hydraulic means being pin-connected to the center of the lower surface of the disk, whereby the table is vertically movable by means of the hydraulic means and rotatable in a horizontal plane.

US 2005/0012315 A1 discloses an arrangement to support the front end of a trailer when the aforementioned trailer is parked on board vessels and other vehicles, comprising connecting means for the detachable attachment of the support respectively to a trailer of the kind in question and to a mobile loading vehicle. The support in this case is in the form of a stand with support legs situated at a mutual distance from one another and with a crossbar extending between them. Tensioning devices, such as straps, lines, ropes or chains, are capable of being accumulated internally inside the support stand. These are so arranged as to be capable of detachable attachment to the deck of the vessel and of being tensioned. The legs of the support stand exhibit friction-increasing means to increase the friction with the deck of a vessel.

WO 2015/071537 A1 provides a propulsion system for an aquatic vessel is provided. The propulsion system includes a plurality of Magnus-type rotors and a drive arrangement for rotating the plurality of Magnus-type rotors. The plurality of Magnus-type rotors are operable to rotate about corresponding substantially upright axes. The propulsion system also includes a control arrangement for controlling the drive arrangement to vary rates of rotations of the plurality of Magnus-type rotors. Each of the plurality of Magnus-type rotors includes a hollow region therein. Each of the Magnus-type rotors is rotationally supported onto a support arrangement which extends into the hollow region. The drive arrangement includes at least one motor disposed in the hollow region and located outside the support arrangement such that the at least one motor is accessible for maintenance. Furthermore, the at least one Magnus-type rotor includes a ventilation aperture arrangement for enabling an upward movement of air to occur in operation within the at least one Magnus-type rotor for ventilating and cooling the drive arrangement and/or other internal components.

US5832856 discloses a ship with a weatherdeck closing a top of the hull, cargo carrying decks disposed below the weatherdeck and lower decks disposed below the cargo decks. Longitudinally extending rail pairs extend along the cargo deck from the stern towards the bow of the hull. Each rail pair guides trolleys conveying cargo from an exterior of the hull through an opening.

WO2012036352 discloses a wind turbine and a wind turbine assembly moving device and a method for loading/unloading a wind turbine assembly using same which is installed aboard a wind turbine installation ship, comprising: a rail having one side located inside an operating radius of a crane and the other side located outside the operating radius of the crane; a moving deck installed in such a manner that enables movement along the rail and equipped in such a manner that the wind turbine assembly can be loaded; a driving means equipped to move the moving deck; and a securing means equipped to fix the wind turbine assembly onto the moving deck.

### Summary of the Invention

According to an aspect of the invention there is provided a system as defined in appended claim 1.

According to a further aspect of the invention there is provided a method as defined in appended claim 13.

Preferable features of the invention are defined in the appended dependent claims.

In embodiments of the disclosure, there is provided a transport for a conveying a Flettner rotor over a deck of a vessel, the transport comprising: a trolley for rolling engagement with a railway, the trolley comprising: a chassis with wheels for engaging the railway; and a load bearing mechanism configured to engage a base of the Flettner rotor to transfer the load of the Flettner rotor to the railway. The transport can be used to move Flettner rotors over the deck of a vessel in an efficient and straightforward manner so that they do not obstruct access of cranes and loading, discharging and other machinery to the deck of the vessel.

Preferably, the load bearing mechanism comprises at least one lifting point and, preferably, three lifting points.

Preferably, the at least one lifting point comprises at least one jack and, preferably, wherein the at least one jack comprises a screw jack further and a travelling nut.

Preferably, the at least one lifting point comprises three lifting points, preferably the three lifting points comprise at least three jacks and, more preferably, wherein the three jacks are synchronised.

Where the three jacks are synchronised, they progress at the same rate which provides reliable movement and greater control and stability during an operation to lift a Flettner rotor.

Preferably, two of the lifting points are located towards either end of a first side of the chassis and one of the lifting points is located centrally on a second opposing side of the chassis.

Preferably, two wheels are located on the second opposing side of the chassis, wherein the lifting point located centrally on the second opposing side of the chassis is configured to act as a point about which the Flettner rotor can pivot when the transport is bearing its load, such that even load distribution across the two wheels located on the second opposing side is maintained.

Advantageously, this feature ensures good traction of the two wheels with the railway is maintained, reducing the likelihood of any wheel slippage.

Preferably, the load bearing mechanism is electrically powered, preferably by an on board battery.

Preferably, at least one of the wheels is a double flanged wheel.

This prevents lateral movement of the wheels relative to the rail with which they are engaged.

Preferably, at least one of the wheels is configured to engage a flat rail.

Advantageously, lateral movement of the wheel which engages the flat rail relative to the flat rail is permitted. The unrestricted lateral movement of the wheel means that this wheel does not experience lateral loads.

Preferably, the trolley further comprises a drive mechanism for driving at least one of the wheels.

Preferably, the drive mechanism is configured to drive wheels on only one side of the transport.

In this way, the longitudinal loads generated by the drive mechanism act on one line which reduces the likelihood of crabbing and enables simpler control of the transport.

Preferably, the drive mechanism is electrically powered, preferably by an on board battery.

Preferably, the chassis is flexible for improved wheel engagement with railway height variation whereby the chassis is able to warp to maintain wheel engagement with the railway.

This reduces the likelihood of wheel slippage as good traction is maintained. It also removes the need for bogies and suspension.

Preferably, the chassis has a generally square or rectangular configuration.

Preferably, the trolley further comprises a lifting subframe, preferably, wherein the lifting subframe is triangular in shape.

Preferably, the lifting subframe includes a bearing point at each corner of the subframe for supporting the Flettner rotor, in use.

Preferably, each lifting point engages the lifting subframe and, preferably, a corner of the lifting subframe.

According to an example of the invention, there is provided a vessel comprising: a transport comprising a trolley adapted to convey a Flettner rotor over a deck of a vessel; and a railway for guiding movement of the transport over the deck of the vessel.

The transport can be used to move Flettner rotors over the deck of the vessel in an efficient and straightforward manner so that they do not obstruct access of cranes and loading, discharging and other machinery to the deck of the vessel. Preferably, the vessel further comprises a support structure supporting the railway such that the railway is raised above the deck of the vessel.

Preferably, the transport is the transport of the first aspect of the invention. Preferably, the vessel further comprises a foundation on the deck of the vessel for supporting a Flettner rotor.

According to the invention, there is provided a method of conveying a Flettner rotor over a deck of a vessel, the method comprising the steps of: moving a transport along a railway into a position underneath the Flettner rotor; raising a lifting subframe of the transport to engage with an underside of the Flettner rotor, thereby transferring the weight of the Flettner rotor from a foundation to the trolley; and conveying the transport with the Flettner rotor along the railway over the deck of the vessel.

Preferably, the method further comprises the steps of: conveying the transport with the Flettner rotor to a storage foundation; and lowering the lifting subframe of the transport, thereby transferring the weight of the Flettner rotor from the trolley onto the storage foundation.

There is provided a foundation for supporting a Flettner rotor, the foundation preferably comprising two foundation supports for contacting a deck of a vessel either side of a railway located on the deck of the vessel, such that a cavity is defined by the foundation supports through which a transport can be driven along the railway.

Preferably, each foundation support comprises at least one bearing point upon which, in use, a corresponding bearing point receiving location of the Flettner rotor rests, preferably, wherein each bearing point is dome shaped.

Preferably, the foundation further comprises at least one securing point which, in use, can be used to secure the Flettner rotor to the foundation.

### Brief Description of Drawings

Embodiments of the present invention will now be described, by way of example only, with reference to the accompanying drawings, in which:
Figure 1a depicts a plan view of a vessel comprising a transport on a railway and a Flettner rotor wherein the railway runs longitudinally over the deck of the vessel;
Figure 1b depicts a plan view of a vessel comprising a transport on a railway and a Flettner rotor, wherein the railway runs transversely over the deck of the vessel;
Figure 1c depicts a plan view of a vessel comprising a transport on a railway and a Flettner rotor, wherein the railway runs longitudinally and transversely over the deck of the vessel;
Figure 2 depicts the transport depicted in Figure 1 in greater detail;
Figure 3a depicts the Flettner rotor depicted in Figure 1 in greater detail;
Figure 3b depicts foundation supports of a foundation;
Figure 4 depicts an integrated lifting mechanism of the transport of Figures 1 and 3 in isolation;
Figure 5a depicts an integrated drive mechanism of the transport of Figures 1 and 3 in isolation; and
Figure 5b depicts an alternative integrated drive mechanism.

### Detailed Description

The present invention is directed to a transport which conveys a Flettner rotor along a railway on the deck of a vessel.

The term railway, as used in this application, refers to a pair of parallel tracks or rails along which the transport can travel.

In one embodiment, the railway runs longitudinally over the deck of a vessel. Where the terms inboard and outboard are used herein, it will be understood that inboard components are those which are relatively closer to the longitudinal centreline of the vessel upon which the components are located than corresponding outboard components, and that outboard components are those which are relatively further from the longitudinal centreline of the vessel than corresponding inboard components.

In another embodiment, the railway runs transversely over the deck of a vessel. The inboard or outboard components described herein could just as easily be aft components (i.e. the components which are relatively closer to the stern of the vessel) and the outboard or inboard components described herein could just as easily be forward components (i.e. the components which are relatively closer to the front of the vessel).

In another embodiment, the railway runs transversely and longitudinally over the deck of a vessel.

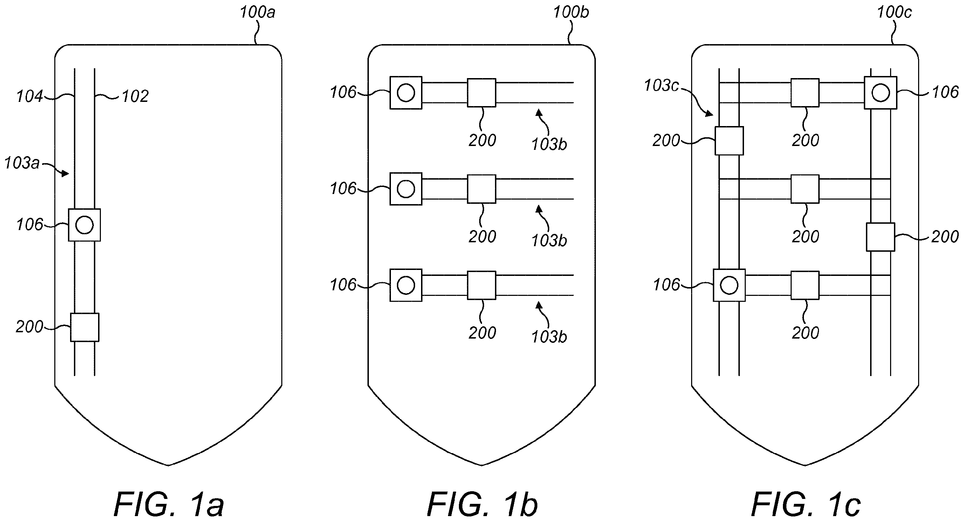

Figure 1a depicts a plan view of a vessel 100a. Located on the deck of the vessel 100a is a railway 103a which runs longitudinally over the deck of the vessel. The railway 103a comprises an inboard rail 102 and an outboard rail 104 which run along the length of the deck of the vessel 100a on the starboard side. The inboard rail 102 is the rail closest to the longitudinal centreline of the vessel 100a and the outboard rail 104 is the rail furthest from the longitudinal centreline of the vessel 100a.

Also depicted in Figure 1a is a transport for a conveying a Flettner rotor over the deck of the vessel 100a, the transport comprising a trolley 200, and a Flettner rotor 106.

Figure 1b depicts a plan view of a vessel 100b according to an alternative embodiment. Located on the deck of the vessel 100b is a railway 103b which runs transversely over the deck of the vessel 100b. The depicted railway 103b comprises three pairs of transversely extending rails which run along the width of the deck of the vessel 100b. Other numbers of pairs of transversely extending rails are envisaged.

Also depicted in Figure 1b is a transport for conveying a Flettner rotor over the deck of the vessel 100b, the transport comprising a trolley 200, and a Flettner rotor 106.

Figure 1c depicts a plan view of a vessel 100c according to a further alternative embodiment. Located on the deck of the vessel 100c is a railway 103c which runs transversely and longitudinally over the deck of the vessel 100c. The railway 103c comprises a network of transversely and longitudinally extending rails which run along the width of the deck of the vessel 100c.

Also depicted in Figure 1c is a transport for conveying a Flettner rotor over the deck of the vessel 100c, the transport comprising a trolley 200, and a Flettner rotor 106.

In an alternative embodiment, the railway may be provided on a support structure supporting the railway such that the railway is raised above the deck of the vessel. Advantageously, this provides clearance over deck fittings on the vessel deck.

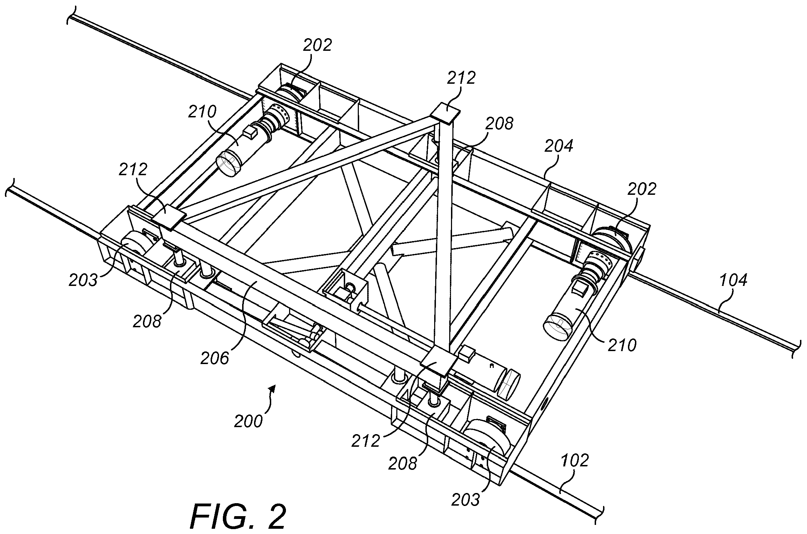

Figure 2 depicts the transport sitting on the railway 103a depicted in Figure 1a in greater detail. As such, various components of the transport will be described as inboard and outboard components based on their position relative to the vessel 100a depicted in Figure 1a. It will be understood that, were the transport to be sitting on the railway 103b depicted in Figure 1b, the various components would be labelled forward and aft, depending on the orientation of the transport.

The transport comprises a trolley 200 which comprises four wheels, two of which are outboard wheels 202 and two of which are inboard wheels 203, a chassis 204 and a triangular lifting subframe 206. The trolley further comprises an integrated lifting mechanism in the form of three screw jacks 208 coupled between the chassis 204 and the lifting subframe 206, for raising the lifting subframe 206 relative to the chassis, and an integrated drive mechanism in the form of two drive mechanism motors 210, one coupled to each outboard wheel 202.

All the mechanical components required for movement of Flettner rotors are fitted to the chassis 204 of the trolley 200. The transport is interchangeable and can be used to service multiple Flettner rotors on the deck of a vessel, as shall be described in greater detail below. The transport provides a much simpler, easier to maintain, more efficient and more cost effective system for movement of Flettner rotors as opposed to building movement functions into each Flettner rotor.

The chassis 204 and lifting subframe 206 may be made of steel, although it will be understood that any other suitable materials may be used.

The chassis 204 is substantially rectangular in shape with a grillage fabrication, as depicted in Figure 2. The main structure of the chassis 204 being parallel inboard and outboard longitudinal beams, to which the inboard and outboard wheels 203 and 202 are respectively fitted, with a plan bracing system. The rectangular chassis 204 provides a long wheelbase for improved stability.

The chassis 204 is flexible for improved wheel engagement with railway height variation whereby the chassis is able to warp out of the horizontal plane of the chassis 204 in a rest position to maintain wheel engagement with the railway 103a. This also removes the need for bogies and suspension.

The trolley is preferably approximately 5000mm in length and 3600mm in width, although these dimensions can be varied depending on the specific application. For example, the dimensions can be varied dependent on those of the railway 103a and Flettner rotor 106 and any other such parameters, as would be understood by the skilled person.

Wherever possible, the components fitted to the trolley will be accessible for easy servicing.

The lifting subframe 206 is substantially triangular in shape. Two of the screw jacks 208 are located on an inboard side of the trolley 200, one at each corner of the inboard side of lifting subframe 206, and one of the screw jacks 208 is located on an outboard side of the trolley 200 at the corner on the outboard side of the lifting subframe 206.

The lifting subframe 206 comprises a bearing point 212 at each corner of the lifting subframe 206 for supporting a Flettner rotor in use. These bearing points 212 are located directly above the point at which a corresponding one of the screw jacks 208 engages the lifting subframe 206. Each bearing point 212 is configured to engage an underside of a Flettner rotor such that the load of the Flettner rotor is born by the bearing points 212 as the lifting subframe 206 is raised, as shall be described in greater detail below.

The transport may further comprise a storm brake which acts as a failsafe locking mechanism to secure the trolley 200 in position should any issues arise, particularly when the transport is loaded with a Flettner rotor. It can also be used to secure trolley 200 in position for storage of a Flettner rotor loaded onto the transport. Alternatively, structural stops may be provided at discrete locations along the length of the railway 103a, 103b, 103c which the trolley 200 may be secured to. A mechanism may also be provided by which the trolley may be lashed to the deck at any location.

The transport may further comprise sensors to detect: obstacles in the path of the transport, derailment of the transport, any tilt transport/railway/vessel, the relative positions of the lifting subframe 206 and the chassis 204 of the transport, and the position of the transport along the railway 103a (e.g. to determine if it is in the correct place along the railway 103a to perform a lifting operation, i.e. is it position at the correct location underneath the Flettner rotor 106).

An audible alarm may be sounded, a visual signal may be provided and/or an auto stop feature may be engaged should, for example, an object be detected in the path of the transport, should the tilt or trim of the transport exceed a predetermined threshold level (e.g. beyond 3º), should derailment of the transport occur, should the transport be in an incorrect position along the railway where the user attempts to perform a lifting operation.
The transport may further comprise a control pendant, control unit, remote control, pedestal at a fixed location on the deck, or other suitable controller to allow operation of the transport by deck crew. The speed of the transport may be configurable to be set at a slow walking pace so that an operator can control the transport while walking alongside the transport.

The transport may further comprise buffers, such as crane buffers, to bring the trolley 200 to a controlled stop at the limits of the track and should two transports meet one another.

Equipment fitted to the outboard longitudinal beam of the chassis 204 includes the drive mechanism, a safety storm brake, and couplings. In this way all longitudinal loads (except inertia and wind load) act on one line which reduces the likelihood of crabbing and enables simpler control of the transport.

All the powered components of the transport may be battery powered, primarily the drive and lifting mechanisms. A battery pack may be provided on the transport to provide the power to these components. They may, alternatively, be powered by an electrical supply located on the vessel 100a.

The trolley 200 is depicted sitting on the railway depicted in Figure 1a, which comprises an inboard rail 102, in the form of a flat rail, and an outboard rail 104, which is a tee section. The outboard rail 104 may also be substantially I-shaped or T-shaped in cross section. As such, the camber of the deck of the vessel 100a can be counter acted as the outboard wheels 202 will be located higher than the inboard wheels 203 meaning that the transport remains level.

In the transverse railway 103b depicted in Figure 1b, both rails may be in the form of a flat rail as there is no need to counteract the camber of the deck of the vessel 10b.

The trolley 200 is in frictional rolling engagement with the railway via the outboard and inboard wheels 202 and 203. As such, no grease is required on deck in order for the transport to operate, which could be potentially hazardous. In an alternative embodiment, the engagement between the wheels and one or more of the rails could be a tooth and gear type engagement. One of the rails may comprise teeth which engage with corresponding gears comprising part of one or more of the wheels.

In one embodiment, the two outboard wheels 202 are configured to engage the outboard rail 104, and are double flanged to prevent lateral movement of the outboard wheels 202 relative to the outboard rail 104. The two inboard wheels 203 are configured to engage the flat inboard rail 102, and the outer surface of the inboard wheels 203 is substantially flat such that lateral movement of the inboard wheels 203 relative to the flat outboard rail 104 is permitted. The unrestricted lateral movement of the inboard wheels 203 relative to the outboard wheels 202, which results from their flat tread, means that the inboard wheels 203 do not experience lateral loads. All horizontal loads transverse to the railway are reacted onto the rail by the wheel flanges. A long wheelbase on the flanged outboard wheels 202 ensures good tracking meaning the transport is much easier to control. This limits any 'crabbing' (skewing) from occurring, which would otherwise be a potential issue when the trolley 200 is moving under the load of the Flettner rotor 106.

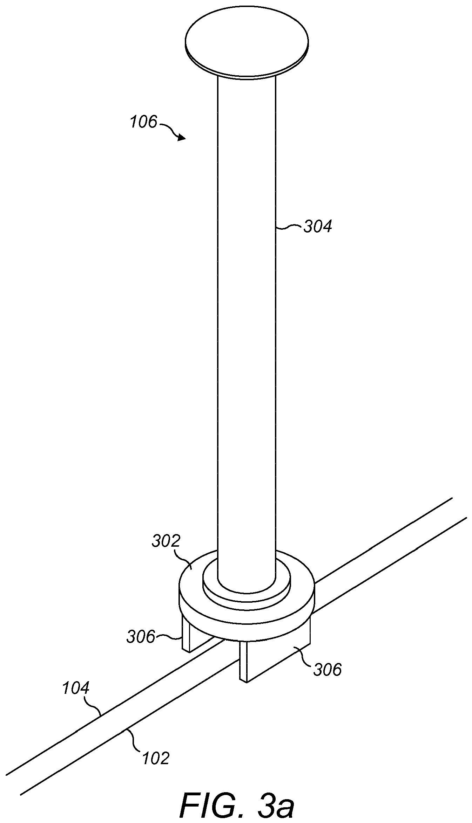

Figure 3a depicts the Flettner rotor 106 of Figure 1a in greater detail. The Flettner rotor 106 is in an operating position with the inboard rail 102 and the outboard rail 104 of the railway running beneath it. As can be seen in Figure 3a, the Flettner rotor 106 comprises a pedestal 302 and a rotor body 304. The pedestal 302 sits on a foundation on the deck of the vessel in the form of two foundation supports 306 located either side of the railway. The Flettner rotor 106 may be secured to the foundation supports 306 via lashings or other suitable securing mechanism.

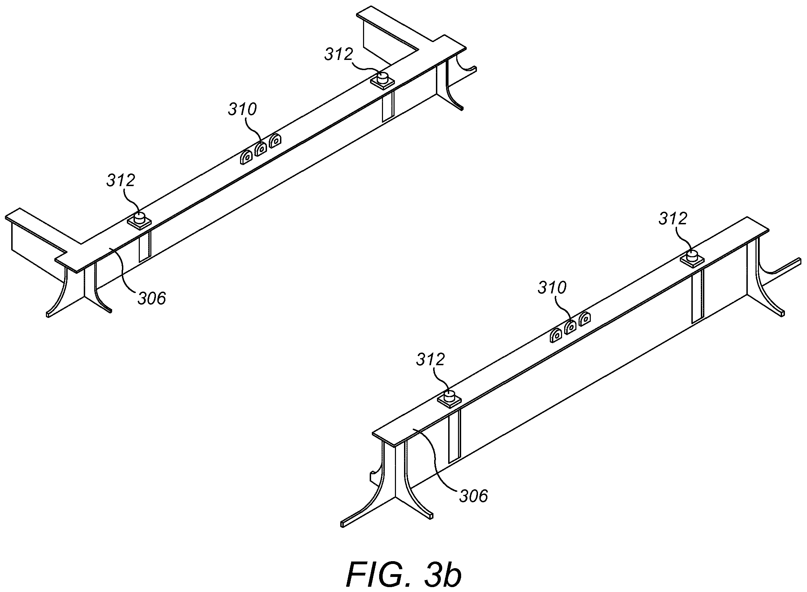

Figure 3b depicts the foundation supports 306 in greater detail. Each foundation support 306 comprises two bearing points 312 upon which the Flettner rotor 106 rests as well as a lashing/securing point 310.

In its operating position, the Flettner rotor 106 straddles the railway and a cavity is provided underneath the Flettner rotor 106 and between the two foundation supports 306 such that the transport can be driven underneath the Flettner rotor 106 and pass through the cavity.

The bearing points 312 are configured to engage corresponding bearing point receiving locations on the underside of the Flettner rotor pedestal 302 in a cup and dome type arrangement. The bearing points 312 on the foundation supports 306 are dome shaped and the bearing point receiving locations on the underside of the Flettner rotor 106 pedestal 302 are cup shaped. The Flettner rotor 106 can be lashed, or otherwise secured, to the foundation supports 306 via the lashing/securing point 310. Turnbuckles may be used as lashings.

By virtue of this design, misalignments between the foundation supports 306 and the Flettner rotor 106 can be accommodated which allows for looser build tolerances, and short or long term changes in deck shape (bending, warping etc.).

As mentioned above, the trolley 200 can be moved along the railway to a position underneath the pedestal 302 of the Flettner rotor 106. Once in a position underneath the Flettner rotor 106, the integrated lifting mechanism of the transport is used to raise the lifting subframe 206 until the bearing points 212 of the lifting subframe 206 engage the underside of the pedestal 302 of the Flettner rotor 106. Continued raising of the lifting subframe 206 relative to the chassis 204 by the integrated lifting mechanism lifts the Flettner rotor 106 from the foundation supports 306 on the deck of the vessel, thereby transferring the load of the Flettner rotor 106 onto the trolley 200. From this position, movement of the trolley 200 along the railway moves the Flettner rotor 106.

Where the Flettner rotor 106 is lashed to the foundation supports 306, the lashings are removed before the lifting subframe 206 is engaged with the underside of the pedestal 302 of the Flettner rotor 106. The transport may be provided with a mechanism for securing the pedestal 302 to trolley once it has been lifted off the foundation supports 306. The operation of the transport will be described in greater detail below.

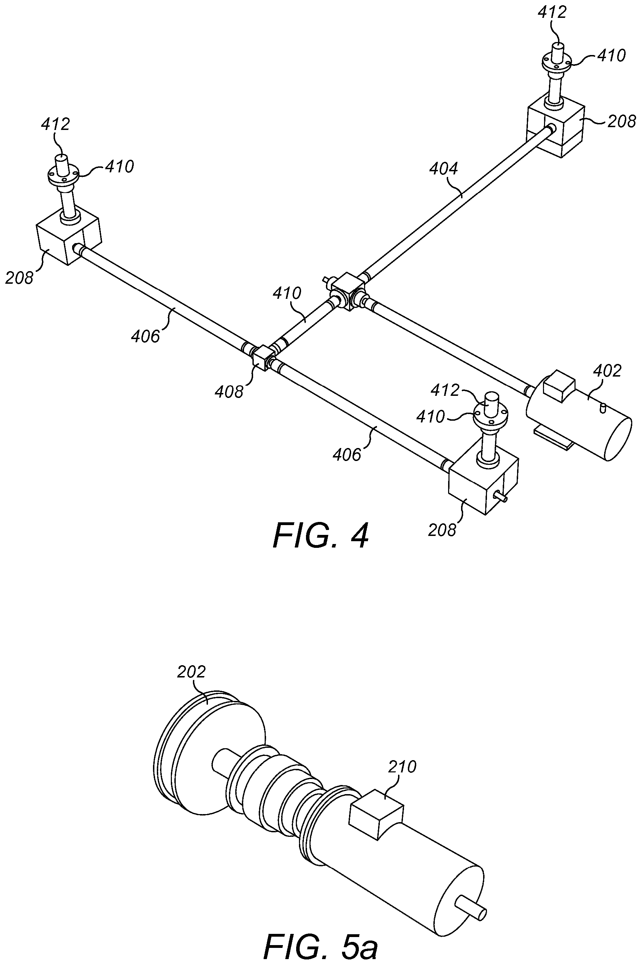

Figure 4 depicts the aforementioned integrated lifting mechanism of the transport in isolation. The outboard screw jack 208 is connected to an electrical screw jack motor 402 by a transverse drive shaft 404. A further transverse drive shaft 410 connects the screw jack motor 402 to a gear box 408 which is in turn connected to two longitudinal drive shafts 406 which are each connected to a respective inboard screw jack 208. In this configuration, a single screw jack motor 402 can be used to drive all three screw jacks 208. The screw jack motor 402 is powered by electricity. Advantageously, this arrangement ensures that each screw jack 208 is wound at the same rate such that they are synchronous and progress at the same rate. This provides reliable movement and greater control during a lifting operation.

Each screw jack 208 comprises a lifting screw 412 upon which a travelling nut 410 is located. The lifting screw 412 is coupled to an input shaft comprising a worm gear such that rotation of the input shaft rotates the lifting screw 412. The input shaft itself is coupled to its corresponding drive shaft. The travelling nut 410 is fixed to the lifting subframe 206 such that rotation of the travelling nut 410 relative to the lifting subframe 206 is prevented. Rotation of the lifting screw 412 by the input shaft raises and lowers the travelling nut 410 and, therefore, the lifting subframe 206.

Each screw jack 208 may be an ACME screw jack with a captive nut.

The screw jacks 208 are mechanical rather than hydraulic. As such, they can also be wound by hand. This is useful as it means the lifting system can still be operated even if there is a power failure.

It is noted that any form of jack may be used in order to provide the lifting function of the transport and that the illustrated arrangement is merely preferable.

The bases of the screw jacks are coupled to the chassis 204 and the travelling nut 410 of each of the screw jacks are coupled to the lifting subframe 206. When the screw jack motor 402 drives the screw jacks 208, the lifting subframe 206 is raised relative to the chassis 204 by the screw jacks 208 to perform the aforementioned lifting function.

The relative locations of the single outboard and two inboard screw jacks 208 facilitates articulation of the Flettner rotor 106 when loaded into the lifting subframe 206 relative to the chassis 204 of the transport, as a degree of pivoting around the single outboard screw jack 208 is permitted. This ensures that the load on the outboard wheels 202 remains evenly distributed which is important as good traction with the railway 103a is maintained reducing the likelihood of any wheel slippage, particularly as the outboard wheels 202 are those driven by the driving mechanism.

Figure 5a depicts the aforementioned integrated drive mechanism of the transport, as depicted in Figure 2, in isolation. Each outboard wheel 202 is directly driven by a respective drive mechanism motor 210. The inboard wheels 203 are freely rotatable.

Where a railway which runs transversely over the deck of the vessel is provided, it is preferable that the aft wheels are those which are each driven by a respective drive mechanism motor 210, so as to provide protection from weather when the vessel is at sea.

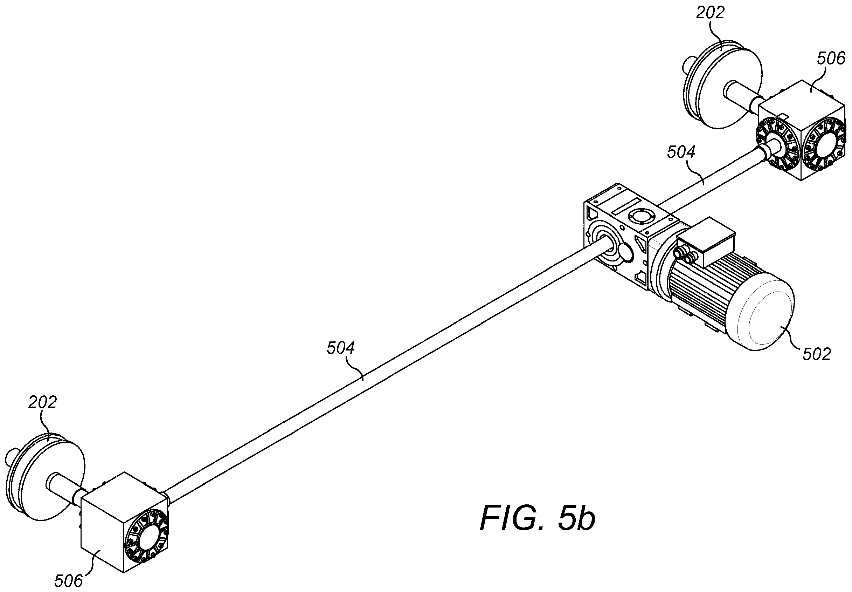

Figure 5b depicts an alternative embodiment of the aforementioned integrated drive mechanism of the transport in isolation. In this embodiment of the integrated drive mechanism, the two outboard wheels 202 are coupled to a single drive mechanism motor 502 by respective drive shafts 504 and gear boxes 506.

In both arrangements, the driven outboard wheels 202 are on the same side of the chassis 204 as the single outboard screw jack 208 which ensures that the load on the driven outboard wheels 202 is evenly distributed via the aforementioned pivoting mechanism, thereby ensuring that a frictional engagement between the driven outboard wheels 202 and the outboard rail 104 is maintained.

The two drive mechanism motors 210 shown in Figure 2 and the single drive mechanism motor 502 shown in Figure 5b are powered by electricity.

In an alternative embodiment, the transport may not comprise an integrated drive mechanism. Instead, all of the wheels of the transport may all be freely rotatable and the transport may be manually moved or may be moved by a winching system.

The mode of operation of the transport will now be described in more detail. In order to move the Flettner rotor 106, the transport is driven to a position beneath the pedestal 302 of the Flettner rotor 106. Any lashings or other securing mechanism between the pedestal 302 and the foundation supports 306 are removed. The lifting mechanism then raises the lifting subframe 206 relative to the chassis 204 such that the lifting subframe 206 engages the underside of the pedestal 302. The pedestal 302 may be secured to the lifting subframe 206. The lifting subframe 206 is then raised further such that the load of the Flettner rotor 106 is transferred from the foundation supports 306 onto the bearing point 212 of the lifting subframe 206 and such that sufficient clearance is provided for the transport to take the load and such that the Flettner rotor 106 can be moved from the foundation supports 306.

At this point, the transport is in a position to move the Flettner rotor 106. The Flettner rotor 106 may be moved along the railway by the transport to a storage location comprising a storage foundation support onto which the Flettner rotor 106 can be lowered by the transport for storage for the duration of a storage period, usually while the vessel 100a is being loaded and/or unloaded. The storage foundation support may be provided away from the centre of the vessel 100, for example, toward the forward or aft end of the vessel 100a such that the central area of the vessel is unobstructed by the Flettner rotor 106.

Alternatively, the Flettner rotor 106 may be stored on the transport. The transport may move the Flettner rotor 106 along the railway to a storage location away from the centre of the vessel 100a. The lifting subframe 206, with the Flettner rotor 106 on top of it, may be lowered back toward the chassis 204 into a storage position. The storm brake of the transport may be used to lock the transport and Flettner rotor 106 in place for the duration of the storage period. Alternatively, structural stops along the railway may be used to lock the transport and Flettner rotor 106 in place, where provided.

Once the storage period has ended, the transport can be used to return the Flettner rotor 106 to its operating position by reversing the aforementioned steps and returning the Flettner rotor 106 to the foundation supports 306.

It will be understood that a single transport may be used to move a plurality of Flettner rotors 106 from their respective foundation supports to corresponding storage foundation supports. A plurality of storage foundation supports may be provided away from the centre of the vessel 100a, for example, toward the forward or aft end of the vessel 100a.

Alternatively, multiple transports may be provided, e.g. one for each Flettner rotor 106 installed on the vessel 100a. Each transport may be provided with coupling for coupling the transport together to form a train. In this way, multiple transports can be moved by a single drive mechanism or means and can be controlled as a single unit.

The aforementioned operations are preferably carried out in sheltered water, usually when the vessel 100a is in harbour.

## Claims

1. A system for use on a vessel (100a), the system comprising:
a Flettner rotor (106);
wherein the system further comprises:
a transport for conveying the Flettner rotor over a deck of the vessel (100a) between an operating position and a storage position;
a railway (103a) for guiding movement of the transport over the deck of the vessel; and
a foundation (306) for supporting the Flettner rotor on the deck of the vessel in an operating position;
wherein the transport comprises a trolley (200), the trolley (200) comprising a chassis (204) with wheels (202, 203) for engaging with the railway (103a) and a load bearing mechanism configured to engage a base of the Flettner rotor (106) to transfer the load of the Flettner rotor (106) from the foundation (306) to the railway (103a).

2. The system of claim 1, wherein the load bearing mechanism comprises at least one lifting point and, preferably, three lifting points, preferably,
wherein the at least one lifting point comprises at least one jack and, more preferably,
wherein the at least one jack comprises a screw jack (208) and a travelling nut.

3. The system of claim 2, wherein the at least one lifting point comprises three lifting points, preferably the three lifting points comprise at least three jacks and, more preferably,
wherein the three jacks are synchronised.

4. The system of claim 3, wherein two of the lifting points are located towards either end of a first side of the chassis (204) and one of the lifting points is located centrally on a second opposing side of the chassis (204), preferably,
wherein two wheels are located on the second opposing side of the chassis and,
wherein the lifting point located centrally on the second opposing side of the chassis is configured to act as a point about which the Flettner rotor (106) can pivot when the transport is bearing its load, such that even load distribution across the two wheels located on the second opposing side is maintained.

5. The system of any preceding claim, wherein the load bearing mechanism is electrically powered, preferably by an on board battery.

6. The system of any preceding claim, wherein at least one of the wheels (202, 203) is a double flanged wheel and/or,
wherein at least one of the wheels (202, 203) is configured to engage a flat rail.

7. The system of any preceding claim, wherein the trolley (200) further comprises a drive mechanism for driving at least one of the wheels (202, 203), preferably,
wherein the drive mechanism is configured to drive wheels (202, 203) on only one side of the transport and/or the drive mechanism is electrically powered, for example, by an on board battery.

8. The system of any preceding claim, wherein the chassis (204) is flexible for improved wheel engagement with railway height variation whereby the chassis is able to warp to maintain wheel engagement with the railway (103a).

9. The system of any preceding claim, wherein the chassis (204) has a generally square or rectangular configuration.

10. The system of any preceding claim, wherein the trolley (200) further comprises a lifting subframe (206), preferably,
wherein the lifting subframe (206) is triangular in shape, more preferably,
wherein the lifting subframe (206) includes a bearing point (212) at each corner of the subframe (206) for supporting the Flettner rotor (106), in use.

11. The system of either of claims 9 and 10, when dependent upon one or more of claims 2 to 4, wherein each lifting point engages the lifting subframe (206) and, preferably, a corner of the lifting subframe (206).

12. The system of any of claims 1 to 11, further comprising a support structure supporting the railway (103a) such that the railway may be raised above the deck of the vessel (100a).

13. A method of conveying a Flettner rotor (106) over a deck of a vessel (100a) between an operating position and a storage position, the method comprising the steps of:
moving a transport along a railway (103a) into a position underneath the Flettner rotor (106);
raising a lifting subframe (206) of the transport to engage with an underside of the Flettner rotor (106), thereby transferring the weight of the Flettner rotor (106) from a foundation to the trolley (200); and
conveying the transport with the Flettner rotor (106) along the railway (103a) over the deck of the vessel (100a),
the method, further comprising the preferable steps of:
conveying the transport with the Flettner rotor (106) to a storage foundation; and
lowering the lifting subframe (206) of the transport, thereby transferring the weight of the Flettner rotor (106) from the trolley (200) onto the storage foundation.

## Patentansprüche

1. System zur Verwendung auf einem Schiff (100a), wobei das System umfasst:
einen Flettner-Rotor (106);
wobei das System ferner umfasst:
ein Transportmittel zum Befördern des Flettner-Rotors über ein Deck des Schiffes (100a) zwischen einer Betriebsposition und einer Lagerposition;
eine Schienenbahn (103a) zur Führung der Bewegung des Transportmittels über das Deck des Schiffes; und
ein Fundament (306) zum Stützen des Flettner-Rotors auf dem Deck des Schiffes in einer Betriebsposition;
wobei das Transportmittel einen Wagen (200) umfasst, wobei der Wagen (200) ein Fahrgestell (204) mit Rädern (202, 203) zum Eingreifen in die Schienenbahn (103a) und einen Lastaufnahmemechanismus umfasst, der konfiguriert ist, um eine Basis des Flettner-Rotors (106) in Eingriff zu bringen, um die Last des Flettner-Rotors (106) vom Fundament (306) auf die Schienenbahn (103a) zu übertragen.

2. System nach Anspruch 1, wobei der Lastaufnahmemechanismus mindestens einen Hebepunkt und vorzugsweise drei Hebepunkte umfasst, vorzugsweise wobei der mindestens eine Hebepunkt mindestens eine Hebevorrichtung umfasst und bevorzugter, wobei die mindestens eine Hebevorrichtung ein Spindelhubgetriebe (208) und eine Laufmutter umfasst.

3. System nach Anspruch 2, wobei der mindestens eine Hebepunkt drei Hebepunkte umfasst, wobei die drei Hebepunkte vorzugsweise mindestens drei Hebevorrichtungen umfassen und wobei die drei Hebevorrichtungen bevorzugter synchronisiert sind.

4. System nach Anspruch 3, wobei zwei der Hebepunkte zu jedem Ende einer ersten Seite des Fahrgestells (204) angeordnet sind und einer der Hebepunkte zentral zu einer zweiten gegenüberliegenden Seite des Fahrgestells (204) angeordnet ist, vorzugsweise wobei zwei Räder auf der zweiten gegenüberliegenden Seite des Fahrgestells angeordnet sind und wobei der Hebepunkt, der zentral auf der zweiten gegenüberliegenden Seite des Fahrgestells angeordnet ist, so konfiguriert ist, dass er als ein Punkt wirkt, um den der Flettner-Rotor (106) schwenken kann, wenn das Transportmittel seine Last trägt, so dass eine gleichmäßige Lastverteilung auf die beiden Räder auf der zweiten gegenüberliegenden Seite erhalten bleibt.

5. System nach einem der vorhergehenden Ansprüche, wobei der Lastaufnahmemechanismus elektrisch angetrieben wird, vorzugsweise durch eine an Bord befindliche Batterie.

6. System nach einem der vorhergehenden Ansprüche, wobei mindestens eines der Räder (202, 203) ein Doppelflanschrad ist und/oder wobei mindestens eines der Räder (202, 203) zum Eingreifen in eine flache Schiene konfiguriert ist.

7. System nach einem der vorhergehenden Ansprüche, wobei der Wagen (200) ferner einen Antriebsmechanismus zum Antreiben mindestens eines der Räder (202, 203) umfasst, vorzugsweise wobei der Antriebsmechanismus konfiguriert ist, um Räder (202, 203) nur auf einer Seite des Transportmittels anzutreiben und/oder der Antriebsmechanismus beispielsweise durch eine Bordbatterie elektrisch angetrieben wird.

8. System nach einem der vorhergehenden Ansprüche, wobei das Fahrgestell (204) für einen verbesserten Radeingriff bei Änderung der Schienenhöhe flexibel ist, wodurch sich das Fahrgestell verziehen kann, um den Radeingriff mit der Schienenbahn (103a) aufrechtzuerhalten.

9. System nach einem der vorhergehenden Ansprüche, wobei das Fahrgestell (204) eine im Allgemeinen quadratische oder rechteckige Konfiguration aufweist.

10. System nach einem der vorhergehenden Ansprüche, wobei der Wagen (200) ferner einen Hebeunterrahmen (206) umfasst, vorzugsweise wobei der Hebeunterrahmen (206) eine dreieckige Form aufweist, bevorzugter, wobei der Hebeunterrahmen (206) einen Lagerpunkt (212) an jeder Ecke der Unterrahmen (206) zur Unterstützung des Flettner-Rotors (106) im Betrieb aufweist.

11. System nach einem der Ansprüche 9 und 10, wenn abhängig von einem oder mehreren der Ansprüche 2 bis 4, wobei jeder Hebepunkt in den Hebeunterrahmen (206) und vorzugsweise in eine Ecke des Hebeunterrahmens (206) eingreift.

12. System nach einem der Ansprüche 1 bis 11, das ferner eine Trägerstruktur, die die Schienenbahn (103a) unterstützt, umfasst, so dass die Schienenbahn über dem Deck des Schiffes (100a) angehoben werden kann.

13. Verfahren zum Befördern eines Flettner-Rotors (106) über ein Deck eines Schiffes (100a) zwischen einer Betriebsposition und einer Lagerposition, wobei das Verfahren die Schritte umfasst:
Bewegen eines Transportmittels entlang einer Schienenbahn (103a) in eine Position unter dem Flettner-Rotor (106);
Anheben eines Hub-Unterrahmens (206) des Transportmittels, um mit einer Unterseite des Flettner-Rotors (106) in Eingriff zu kommen, wodurch das Gewicht des Flettner-Rotors (106) von einem Fundament auf den Wagen (200) übertragen wird; und
Befördern des Transportmittels mit dem Flettner-Rotor (106) entlang der Schienenbahn (103a) über das Deck des Schiffes (100a), wobei das Verfahren ferner die bevorzugten Schritte umfasst:
Transport des Transportmittels mit dem Flettner-Rotor (106) zu einem Lagerfundament; und
Absenken des Hub-Unterrahmens (206) des Transportmittels, wodurch das Gewicht des Flettner-Rotors (106) vom Wagen (200) auf das Lagerfundament übertragen wird.

## Revendications

1. Système destiné à être utilisé sur un navire (100a), le système comprenant :
un rotor Flettner (106) ;
le système comprenant en outre :
un dispositif de transport destiné au transport du rotor Flettner sur un pont du navire (100a) entre une position de fonctionnement et une position de stockage ;
un chemin de fer (103a) destiné à guider le déplacement du dispositif de transport sur le pont du navire ; et
une fondation (306) destinée à supporter le rotor Flettner sur le pont du navire dans une position de fonctionnement ;
dans lequel le dispositif de transport comprend un chariot (200), le chariot (200) comprenant un châssis (204) comportant des roues (202, 203) pour venir en prise avec le chemin de fer (103a) et un mécanisme de support de charge configuré pour venir en prise avec une base du rotor Flettner (106) afin de transférer la charge du rotor Flettner (106) de la fondation (306) au chemin de fer (103a).

2. Système selon la revendication 1, dans lequel le mécanisme de support de charge comprend au moins un point de levage et, de préférence, trois points de levage, de préférence,
dans lequel l'au moins un point de levage comprend au moins un vérin et, plus préférablement,
dans lequel l'au moins un vérin comprend un vérin à vis (208) et un écrou mobile.

3. Système selon la revendication 2, dans lequel l'au moins un point de levage comprend trois points de levage, de préférence les trois points de levage comprennent au moins trois vérins et, plus préférablement,
dans lequel les trois vérins sont synchronisés.

4. Système selon la revendication 3, dans lequel deux des points de levage sont situés vers l'une ou l'autre extrémité d'un premier côté du châssis (204) et l'un des points de levage est situé au centre sur un deuxième côté opposé du châssis (204), de préférence,
dans lequel deux roues sont situées sur le deuxième côté opposé du châssis et,
dans lequel le point de levage situé au centre sur le deuxième côté opposé du châssis est configuré pour servir de point autour duquel le rotor Flettner (106) peut pivoter lorsque le dispositif de transport supporte sa charge, de sorte que la répartition uniforme de la charge entre les deux roues situées du deuxième côté opposé est maintenue.

5. Système selon l'une quelconque des revendications précédentes, dans lequel le mécanisme de support est alimenté électriquement, de préférence par une batterie embarquée.

6. Système selon l'une quelconque des revendications précédentes, dans lequel au moins l'une des roues (202, 203) est une roue à doubles brides et/ou,
dans lequel au moins l'une des roues (202, 203) est configurée pour venir en prise avec un rail plat.

7. Système selon l'une quelconque des revendications précédentes, dans lequel le chariot (200) comprend en outre un mécanisme d'entraînement destiné à entraîner au moins l'une des roues (202, 203), de préférence,
dans lequel le mécanisme d'entraînement est configuré pour entraîner des roues (202, 203) d'un seul côté du dispositif de transport et/ou le mécanisme d'entraînement est alimenté électriquement, par exemple, par une batterie embarquée.

8. Système selon l'une quelconque des revendications précédentes, dans lequel le châssis (204) est souple afin de permettre une mise en prise améliorée des roues avec une variation de hauteur du chemin de fer, rendant ainsi le châssis capable de se déformer pour maintenir la mise en prise des roues avec le chemin de fer (103a).

9. Système selon l'une quelconque des revendications précédentes, dans lequel le châssis (204) présente une configuration généralement carrée ou rectangulaire.

10. Système selon l'une quelconque des revendications précédentes, dans lequel le chariot (200) comprend en outre un sous-châssis de levage (206), de préférence,
dans lequel le sous-châssis de levage (206) présente une forme triangulaire, plus préférablement,
dans lequel le sous-châssis de levage (206) comprend un point de support (212) à chaque coin du sous-châssis (206) pour supporter le rotor Flettner (106), lors de l'utilisation.

11. Système selon l'une quelconque des revendications 9 et 10, lorsqu'elle dépend d'une ou de plusieurs des revendications 2 à 4, dans lequel chaque point de levage vient en prise avec le sous-châssis de levage (206) et, de préférence, avec un coin du sous-châssis de levage (206).

12. Système selon l'une quelconque des revendications 1 à 11, comprenant en outre une structure de support supportant le chemin de fer (103a), de sorte que le chemin de fer peut être élevé au-dessus du pont du navire (100a).

13. Procédé de transport d'un rotor Flettner (106) sur un pont d'un navire (100a) entre une position de fonctionnement et une position de stockage, le procédé comprenant les étapes :
de déplacement d'un dispositif de transport le long d'un chemin de fer (103a) dans une position sous le rotor Flettner (106) ;
d'élévation d'un sous-châssis de levage (206) du dispositif de transport pour venir en prise avec un côté inférieur du rotor Flettner (106), transférant ainsi le poids du rotor Flettner (106) d'une fondation au chariot (200) ; et
de transport du dispositif de transport par le rotor Flettner (106) le long du chemin de fer (103a) sur le pont du navire (100a),
le procédé comprenant en outre les étapes préférables :
de transport du dispositif de transport par le rotor Flettner (106) vers une fondation de stockage ; et
d'abaissement du sous-châssis de levage (206) du dispositif de transport, transférant ainsi le poids du rotor Flettner (106) du chariot (200) à la fondation de stockage.
